# EUROPÄISCHE PATENTSCHRIFT

(11) **EP 2 909 399 B1**
(45) Veröffentlichungstag und Bekanntmachung des Hinweises auf die Patenterteilung: **28.06.2017**
(21) Anmeldenummer: 13779210.7
(22) Anmeldetag: 17.10.2013
(51) Int. Cl.: E05B 9/04, E05B 63/00, E05B 33/00

(54) **SYSTEM MIT TÜRBETÄTIGUNGSTEIL UND SCHLIESSZYLINDER**
SYSTEM COMPRISING A DOOR ACTUATION PART AND LOCKING CYCLINDER
SYSTÈME DOTÉ D'UNE PARTIE D'ACTIONNEMENT DE PORTE ET D'UN BARILLET DE SERRURE

(30) Priorität: 17.10.2012 DE 102012020451; 17.10.2012 DE 102012020450
(43) Veröffentlichungstag der Anmeldung: 26.08.2015
(73) Patentinhaber: dormakaba Deutschland GmbH, 58256 Ennepetal (DE)
(72) Erfinder: SCHWEITZER, Falko, 58332 Schwelm (DE); LORENZ, Leo, 85456 Wartenberg (DE)
(74) Vertreter: Balder IP Law, S.L.
(86) Internationale Anmeldenummer: PCT/EP2013/071753
(87) Internationale Veröffentlichungsnummer: WO 2014/060530

(56) Entgegenhaltungen:
- EP-A1- 1 736 622
- EP-A2- 1 724 417
- EP-A2- 2 275 628
- DE-A1- 10 302 887
- DE-A1-102004 009 992
- US-A- 6 158 259

## Beschreibung

Die Erfindung betrifft ein System gemäß Anspruch 1. Darüber hinaus betrifft die Erfindung ein Verfahren nach dem Oberbegriff von Anspruch 12 zur Verbindung eines Türbetätigungsteils mit einem Schließzylinder, unter Verwendung des erfindungsgemäßen Systems.

### Stand der Technik

Systeme, die Türbetätigungsteile und Schließzylinder umfassen, sind an sich bekannt. Als Türbetätigungsteile werden im Sinne der Anmeldung beispielsweise Türgriffe, Türknaufe oder Elektro(mecha)nische Drehknäufe verstanden, über die bei manueller Betätigung eine Tür entriegelt oder geöffnet werden kann. Elektro(mecha)nische Drehknäufe werden insbesondere dazu genutzt, um ein Schloss von einer Türseite erst nach vorheriger Authentifizierung beispielsweise mittels eines Chips oder einer Ausweiskarte zu entriegeln. Ohne eine derartige Authentifizierung ist der Elektro(mecha)nische Drehknauf, d. h. im Sinne der Anmeldung das Türbetätigungsteil von dem dazugehörenden Schließzylinder entkuppelt. Ein Drehen des Drehknaufs führt daher nicht zu einer Drehung des Schließzylinders, insbesondere nicht zu einem Mitdrehen eines Schließnockens, der sich im Inneren des Schlosses mitdreht. Da sich der Schließnocken im Entkupplungsfall nicht mit dem Drehknauf mitdreht, wird das Schloss nicht entriegelt und somit kann die Tür nicht geöffnet werden. Die bekannten Türbetätigungsteile mit den dazugehörenden Schließzylindern haben den Nachteil, dass diese dem Schloss und Türblatt angepasst in verschiedensten Ausführungen angeboten werden müssen. D. h., dass viele Typen von Schließzylindern mit entsprechend vielen Türbetätigungsteilen, die speziell an die Schließzylinder und an die Gegebenheit des Schlosses und des Türblattes angepasst sind, vorgehalten werden müssen. Zudem gibt es für jede Art von Schließzylindern zwangsläufig einen eigenen Kupplungsmechanismus, was eine enorme Variantenvielfalt mit sich bringt und die Herstellungskosten in die Höhe treibt.

DE 103 02 887 A1 offenbart einen einteiligen Durchgangsbolzen. Ein Schließbart ist an dem Durchgangsbolzen befestigt. Hierbei greift der Schließbart mit Zapfen in eine Längsnut des Durchgangsbolzen ein. Durch die Befestigung überträgt der Durchgangsbolzen das Drehmoment auf den Schließzylinder.

Aufgabe der Erfindung ist es daher, die aus dem Stand der Technik bekannten Nachteile zu überwinden.

Diese Aufgabe wird von einem System gemäß den Merkmalen des Anspruchs 1 gelöst. Des Weiteren wird diese Aufgabe ausgehend von einem Verfahren gemäß dem Oberbegriff des Anspruchs 12 in Verbindung mit dessen kennzeichnenden Merkmalen gelöst. Vorteilhafte Weiterbildungen der Erfindung sind in den abhängigen Ansprüchen angegeben.

Das erfindungsgemäße System, welches ein Türbetätigungsteil, einen Schließzylinder und einen das Türbetätigungsteil und den Schließzylinder verbindendes Verbindungselement umfasst, welches ein- oder mehrteilig ausgestaltet ist, und welches das Türbetätigungsteil und den Schließzylinder über einen variablen Abstand miteinander verbindet, wobei der Abstand zwischen dem Türbetätigungsteil und dem Schließzylinder über das Verbindungselement einstellbar ist, bietet den Vorteil, dass unabhängig von der Bauart, d. h. insbesondere von der Länge des Schließzylinders jedwedes Türbetätigungsteil über das Verbindungselement an den Schließzylinder adaptierbar ist. Die Ausgestaltung der Einstellbarkeit des Abstandes zwischen dem Türbetätigungsteil und dem Schließzylinder über das Verbindungselement bietet zudem den Vorteil, dass beispielsweise baugleiche Schließzylinder mit gleicher Länge in unterschiedlich starken Türblättern verbaut werden können, wobei die unterschiedliche Stärke der Türblätter über das Verbindungselement, welches den Schließzylinder und das Türbetätigungsteil über einen variablen Abstand miteinander verbindet, einstellbar ist. Dadurch lässt sich die vormals große Anzahl von Schließzylindern, die entsprechend der Bauart einer Tür oder eines Schlosses und den mit den Schließzylindern zu verbindenden Türbetätigungsteilen angepasst sind auf ein Minimum reduzieren. Durch die über das Verbindungsteil entstandene Variabilität kann dadurch die Formvielfalt der Schließzylinder von weit über 10.000 auf unter 100 Schließzylinder reduziert werden, um den Anforderungen des Marktes gerecht zu werden.

In vorteilhafter Weise werden das Türbetätigungsteil und der Schließzylinder über das Verbindungselement kraft- und/oder formschlüssig miteinander verbunden. Dadurch wird gewährleistet, dass bei Betätigung des Türbetätigungsteils, nämlich das dabei an dem Türbetätigungsteil anliegende Drehmoment über das Verbindungselement auf den Schließzylinder übertragen wird, um den Schließnocken des Schließzylinders, welcher sich beim Schließvorgang im Inneren des Schlosses mitdreht, zu bewegen.

In besonders vorteilhafter Weise eignet sich das Verbindungselement dazu, das Türbetätigungsteil an die Lage des Schließzylinders anzupassen. Üblicherweise wird der Schließzylinder in einem Schloss ausgerichtet. Diese Ausrichtung, die zwangsweise durch die unterschiedlichen Bauarten und Fertigungstoleranzen der Schlösser bedingt ist, führt teilweise dazu, dass der Schließzylinder in einem Winkelversatz zu der Betätigungsachse, die durch das Türbetätigungsteil, insbesondere das mit dem Schließzylinder in Wirkverbindung stehende Teil des Türbetätigungsteil liegt, versetzt ist. Im äußersten Fall kann die Ausrichtung des Schließzylinders in dem Schloss dazu führen, dass ein Türbetätigungsteil nicht mit dem Schließzylinder verbunden werden kann bzw. die Drehmomentübertragung von dem Türbetätigungsteil auf den Schließzylinder, durch den Winkelversatz bedingt, mit einem erhöhten Kraftaufwand erfolgen muss. Dies kann erfindungsgemäß durch das Verbindungselement, welches den Winkelversatz zwischen dem Schließzylinder und dem Türbetätigungsteil ausgleicht, vermieden werden.

In besonders bevorzugter Weise ist die Demontierbarkeit des Systems durch die kraft- und/oder formschlüssige Verbindung zwischen dem Türbetätigungsteil und dem Schließzylinder, die durch das Verbindungselement zustande kommt, bis zu einem bestimmten Maß gehindert. Dabei wirkt das Verbindungselement zusätzlich als Sicherung, die eine Demontage des Türbetätigungsteils bzw. des Schließzylinders, welche über das Verbindungselement miteinander verbunden sind, verhindert.

Um das Verbindungselement aufzunehmen, und dieses zu sichern, weisen das Türbetätigungsteil und/oder der Schließzylinder wenigstens eine Aufnahme auf, die das Verbindungselement aufnimmt. Um ein Lösen des Verbindungselements aus der Aufnahme des Schließzylinders oder des Türbetätigungsteils bis zu einem gewissen Maß zu verhindern, und um eine kraft- und/oder formschlüssige Verbindung zwischen dem Türbetätigungsteil und dem Verbindungselement bzw. zwischen dem Schließzylinder und dem Verbindungselement zu gewährleisten, wird die kraft- und/oder formschlüssige Verbindung vorzugsweise mittels Verrasten des Verbindungselements in der Aufnahme des Türbetätigungsteils und/oder des Schließzylinders gewährleistet.

Zusätzlich zum Verrasten des Verbindungselements in der Aufnahme des Türbetätigungsteils und/oder des Schließzylinders wird das Verbindungselement vorzugsweise über ein Sicherungselement, welches im Bereich der Aufnahme angeordnet ist, justiert bzw. festgelegt. Vorzugsweise handelt es sich bei dem Sicherungselement um einen federbelasteten Stift, der beim Verrasten des Verbindungselements in der Aufnahme des Türbetätigungsteils und/oder des Schließzylinders in Ausnehmungen, wie beispielsweise Löcher, Rillen oder anderweitige Vertiefungen, die im Verbindungselement ausgestaltet sind, eingreift. Ein Sicherungselement, welches wie vorbeschrieben federbelastet ist, eignet sich besonders bevorzugt zur Sicherung eines in dem Schließzylinder, in dessen Aufnahme aufgenommenen Verbindungselement, da dieses aufgrund der Federbelastung in die Ausnehmungen, die in dem Verbindungselement ausgestaltet sind, selbsttätig eingreift. Natürlich kann es sich bei dem Sicherungselement auch um einen Stift oder eine Schraube handeln, die nach Aufnahme des Verbindungselements in die Aufnahme beispielsweise des Türbetätigungsteils eingeschoben oder eingeschraubt werden, um in die Ausnehmungen, die in dem Verbindungselement ausgestaltet sind, einzugreifen.

Zum Einrasten des Verbindungselements in die Aufnahme des Schließzylinders und/oder des Türbetätigungsteils eignet sich erfindungsgemäß die Ausgestaltung des Verbindungselements, zumindest endseitig an einer Seite als Rasterwelle. Im Querschnitt gesehen, weist die Rasterwelle Wellenkämme und Wellentäler auf, wobei die Wellentäler als Vertiefungen, umlaufend um das Verbindungselement ausgebildet sind. In diese Vertiefungen greift bevorzugt das Sicherungselement, so dass ein Verschieben des Verbindungselements durch die angrenzenden Wellenkämme der Rasterwelle sowohl in die eine als auch in die andere Richtung verhindert wird. Dabei ist das Sicherungselement bevorzugt eine Wellensicherung, die federbelastet ist.

Um nicht nur eine Verbindung zwischen dem Türbetätigungsteil und dem Schließzylinder herzustellen, sondern auch die Funktion des Türbetätigungsteils, nämlich das durch die Betätigung anliegende Drehmoment auf den Schließzylinder zu übertragen, umfasst das Verbindungselement wenigstens ein ein- oder mehrteilig ausgestaltetes Kopplungselement. Der Funktionsweise des Verbindungselements folgend, ist erfindungsgemäß auch das Kopplungselement derart ausgestaltet, dass es die Übertragung des Drehmoments von dem Türbetätigungsteil auf den Schließzylinder in einem variablen Abstand erlaubt. Dieser Abstand ist auch wie das Verbindungselement an sich einstellbar. Vorzugsweise greift das Kupplungselement dabei durch die frei rotierbaren, bzw. feststehenen Teile des Verbindungselements, wie beispielsweise die Rasterwelle und wird kraft- und/oder formschlüssig mit der Schließnocke verbunden.

In üblicher Weise richtet sich der Schließzylinder zum Schloss hin aus. Dadurch kann es zu einem Winkelversatz kommen, der zu einem Fluchtungsfehler führt. Um diesen Fluchtungsfehler auszugleichen wird in die Rosette ein Ausgleichselement eingeschoben, beispielsweise in Form eines Clips. Dabei ist der Clip bevorzugt an die Kontur eines Schlüsselloches in der Rosette angepasst. Der Clip dient nicht nur dazu um einen Fluchtungsfehler ausgleichen zu können, sondern dient zur Stabilisierung des Systems vorzugsweise als Lager für die das Verbindungselement. Zur Aufnahme des Verbindungselements in das Lager, welches aufgrund seiner Lage in der Rosette als Rosettenlager bezeichnet wird, weist das Verbindungselement vorzugsweise an seinem dem Türbetätigungsteil zugewandten Ende eine Lagerfläche auf, über die das Verbindungselement in dem Rosettenlager gelagert wird. Das dem Türbetätigungsteil abgewandte Ende des Verbindungselements, d. h. das Ende des Verbindungselements, welches in die Aufnahme des Schließzylinders geschoben wird, weist ebenfalls bevorzugt eine Lagerfläche auf, die zur Lagerung des Verbindungselements in der Aufnahme des Schließzylinders dient. Insofern ist das Verbindungselement bevorzugt an zwei Stellen des Systems an seinen Enden ausgestalteten Lagerflächen gelagert, nämlich zum einen in dem Rosettenlager und zum anderen in dem Lager, das durch die Aufnahme des Schließzylinders gebildet wird. Dabei ist der Clip vorzugsweise als ein Metall- oder Kunststoffclip ausgestaltet. Natürlich können auch mehrere Clips dazu dienen, um einen Fluchtungsfehler auszugleichen bzw. um als Rosettenlager zu dienen.

Um Wiederholungen bezüglich der Vorteile des erfindungsgemäßen Verfahrens zu vermeiden, wird auf die vorteilhafte Ausgestaltung des erfindungsgemäßen Systems verwiesen und es wird voll umfänglich auf diese zurückgegriffen.

Weitere, die Erfindung verbessernde Maßnahmen werden nachstehend gemeinsam mit der Beschreibung eines bevorzugten Ausführungsbeispiels der Erfindung anhand der Figur näher dargestellt. Es zeigt:

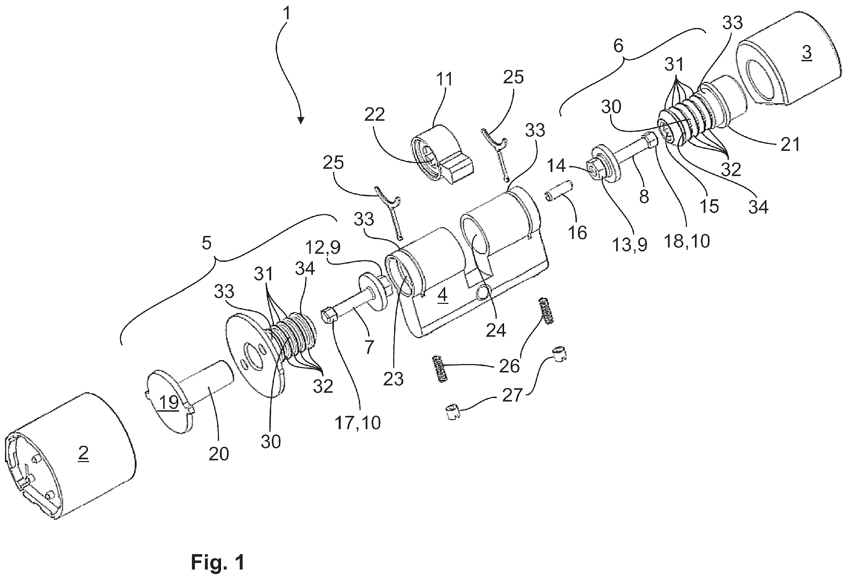

- Fig. 1: eine Explosionszeichnung eines erfindungsgemäßen Systems, welches zwei Türbetätigungsteile, einen Schließzylinder und die Türbetätigungsteile mit dem Schließzylinder verbindende Verbindungselemente umfasst.

Figur 1 zeigt eine Explosionsansicht eines Ausführungsbeispiel eines erfindungsgemäßen Systems, umfassend zwei Türbetätigungsteile 2 und 3, einen Schließzylinder 4 und die Türbetätigungsteile 2 und 3 und den Schließzylinder 4 verbindende Verbindungselemente 5 und 6, welche vorliegend mehrteilig ausgestaltet sind, und welche die Türbetätigungsteile 2 und 3 und den Schließzylinder 4 über einen variablen Abstand miteinander verbinden, wobei der Abstand zwischen den Türbetätigungsteilen 2 und 3 und dem Schließzylinder 4 über die Verbindungselemente 5 und 6 einstellbar ist.

Die Verbindungselemente 5 und 6 umfassen Rasterwellen 30 durch die jeweils ein das Drehmoment von den Türbetätigungsteilen 2 auf den Schließzylinder 4 übertragendes Kopplungselement 7 im Falle des Verbindungselements 5 greift bzw. das Drehmoment von den Türbetätigungsteilen 3 auf den Schließzylinder 4 übertragendes Kopplungselement 8 im Falle des Verbindungselements 6 in dieses eingreift. Die Kopplungselemente 7 und 8 sind dabei bevorzugt als Welle ausgebildet.

Um die Rasterwellen 30 der Verbindungselemente 5 und 6 aufnehmen zu können, weist der Schließzylinder 4 Aufnahmen 23 und 24 auf, die in üblicher Weise zur Aufnahme eines Zylinderkerns dienen. Zur Lagerung der Rasterwellen 30 in den Aufnahmen 23 und 24 weisen die Rasterwellen 30 an ihren den Türbetätigungsteilen 2 und 3 abgewandten Enden 34 jeweils eine Lagerfläche 34 auf. Dabei weist die Lagerfläche 34 einen geringfügig größeren Durchmesser auf als der Durchmesser der Ringe 31 bzw. Wellenkämme der Rasterwelle 30. Dadurch ist nicht nur eine Lagerung der Rasterwelle 30 in dem Schließzylinder 4 gewährleistet, sondern der geringfügig größere Durchmesser der Lagerfläche in Bezug auf die Ringe 31 der Rasterwelle 30 erhöht die Beweglichkeit der Rasterwelle 30 in der Aufnahme 23 oder 24 außerhalb ihrer axialen Erstreckung. D. h., dass die Freiheitgrade einer Ausrichtung zu einem in einem Schloss ausgerichteten Schließzylinder 4 durch die eben beschriebene Ausgestaltung der Rasterwelle 30 noch erhöht werden. Auf der den Türbetätigungsteilen 2 und 3 zugewandten Enden ist ebenfalls jeweils eine Lagerfläche 33 an den Rasterwellen 30 ausgestaltet, die einen geringfügig größeren Durchmesser aufweisen als der Durchmesser der Ringe 31 bzw. Wellenkämme der Rasterwelle 30. Die Lagerflächen 33 werden bevorzugt in Ausgleichselementen in Form eines Clips bzw. eines Rosettenlagers, welche vorliegend nicht dargestellt sind, gelagert. Insofern sind die Rasterwellen an zwei Stellen gelagert, nämlich über die Lagerflächen 33 und 34, nämlich zum einen in den Aufnahmen 23 und 24 des Schließzylinders 4 als auch zum anderen in hier vorliegend nicht dargestellten Rosettenlagern im Bereich der Türbetätigungsteile 2 und 3.

An ihren jeweils den Türbetätigungsteilen 2 und 3 abgewandten Enden 12 und 13 weisen die Kopplungselemente 7 und 8 eine Außenkontur in Form einer Sechskantmutter 9 auf, wobei die Sechskantmutter 9 drehfest mit einer Schließnocke 11 des Schließzylinders 4 in Eingriff gelangt.

Dazu weist die Schließnocke 11 eine hier exemplarisch durchgehende Bohrung 22 in Form einer Sechskantbohrung auf, mit der sie mit den Enden 12 und 13 der Kopplungselemente 7 und 8 in Eingriff gelangt. Dabei kann das Kopplungselement 7 an sich als Sechskant ausgestaltet sein, der mit Bohrung 22 der Schließnocke 11 drehfest in Eingriff gelangt.

Vorliegend weisen die Kopplungselemente 7 und 8 an ihren den Türbetätigungsteilen 2 und 3 abgewandten Enden 12 und 13 zudem jeweils eine Bohrung 14 auf, in die jeweils nach Ineingriffbringen der Enden 12 und 13 mit der Schließnocke 11 ein die Enden 12 und 13 verbindender und insbesondere die Enden 12 und 13 verklemmender Spannbolzen 16 eingeschoben wird.

An den jeweils den Türbetätigungsteilen 2 und 3 zugewandten Enden 17 und 18 weisen die Kopplungselemente 7 und 8 ebenfalls eine Außenkontur in Form einer Sechskantmutter 10 auf, die in einer Bohrung 15 der Rasterwelle 30 des Verbindungselements 6 drehfest in Eingriff gelangt. Die Bohrung 15 ist dabei als Sechskantbohrung ausgeführt, um die Sechskantmutter 10 drehfest aufnehmen zu können. Natürlich kann das Kopplungselement 7 an sich auch als Sechskant ausgestaltet sein, der mit Bohrung 15 der Rasterwelle 30 des Verbindungselements 6 drehfest in Eingriff gelangt. Vorliegend sind die Sechskantmuttern 9 und 10 an den Enden 12, 13, 17 und 18 der Kopplungselemente 7 und 8 unterschiedlich groß ausgestaltet, was eine Orientierung der Kopplungselemente 7 und 8 bei der Montage des Systems 1 erleichtert. Natürlich kann die Außenkontur der Enden 12, 13, 17 und 18 der Kopplungselemente 7 und 8 auch eine andere Kontur als die einer Sechskantmutter 9 und 10 sein, wie beispielsweise in Form von eines Torx oder eines Innsechskantes. Natürlich müssen dann auch die Bohrungen, die zur Aufnahme der Kopplungselemente 7 und 8 dienen, der Form der Enden 12, 13, 17 und 18 angepasst sein. Es ist auch nicht zwingend notwendig, beispielsweise die Bohrung 15 der Außenkontur dem Ende 18 des Kopplungselements 8 anzupassen, damit das Kopplungselement 8 in einen drehfesten Eingriff mit der Bohrung 15 gelangt. Die Bohrung 15 könnte beispielsweise auch als Sackloch ausgeführt sein, in die das Kopplungselement 8 mit seinem Ende 18 eingepresst wird. Natürlich ist es auch denkbar, unterschiedliche Bohrungen bzw. unterschiedliche Außenkonturen der Enden 12, 13, 17 und 18 in Kombination miteinander vorzusehen. So könnte beispielsweise an einem Türbetätigungsteil 2 oder 3 die Bohrung 15 als Sackloch ausgeführt sein und eine der Bohrung 15 entsprechende Bohrung an dem anderen Türbetätigungsteil 3 oder 2 als Sechskantbohrung ausgeführt sein. Diese Ausgestaltung könnte beispielsweis für eine bessere Orientierung bei der Montage des Systems dienen.

Das Verbindungselement 5 umfasst in der hier speziellen Ausführung des erfindungsgemäßen Systems 1 neben der Rasterwelle 20 und dem Kopplungselement 7 an der dem linken Türbetätigungsteil 5 zugewandten Seite eine Kupplungsscheibe 19, die mit einem Zapfen 20 in die Rasterwelle 30 des Verbindungselements 5 greift.

Der Zapfen 20 weist eine zumindest in Richtung des Kopplungselementes 7 weisende, korrespondierende Ausnehmung bzw. Bohrung auf, mit der sie mit dem Ende 17 des Kopplungselementes 7 drehfest in Eingriff gelangt. Die Bohrung ist in Figur verdeckt und daher nicht sichtbar. Die Rasterwelle 30 des Verbindungselements 5 in dem hier speziellen Ausführungsbeispiel ist daher frei rotierbar auf dem Kopplungselement 7 gelagert, und insbesondere auf dem Zapfen 20 der Kupplungsscheibe 19, wobei der Zapfen 20 drehfest mit dem Kopplungselement 7 in Eingriff gelangt, frei rotierbar gelagert.

Das Türbetätigungsteil 2 ist auf das Verbindungselement 5 drehfest aufsetzbar, wobei die Kupplungsscheibe 19 zumindest abschnittsweise in dem Türbetätigungsteil 2 aufgenommen wird, so dass im entkuppelten Zustand kein Drehmoment vom Türbetätigungsteil 2 über das Kopplungselement 7 auf den Schließzylinder 4 übertragen wird. Da sich der Schließnocken 11 im Entkupplungsfall nicht mit dem Türbetätigungsteil 2 mitdreht, wird das Schloss nicht entriegelt und somit kann die Tür nicht geöffnet werden. Erst eine Authentifizierung mittels beispielsweise Chip, Code oder Karte führt zu einer Kupplung des Türbetätigungsteils 2 mit der Kupplungsscheibe 19, so dass das am Türbetätigungsteil 2 anliegende Drehmoment über die Kupplungsscheibe 19 und insbesondere über den an der Kupplungsscheibe 19 ausgebildeten Zapfen 20 auf das Kopplungselement 7 und darüber auf die Schließnocke 11 übertragen wird.

Im Gegensatz dazu ist das Türbetätigungsteil 3 an dem Ende der Rasterwelle 30 des Verbindungselements 6, welches dem Türbetätigungsteil 3 zugewandt ist, drehfest gelagert, so dass bei Betätigung des Türbetätigungsteils 3 über die Rasterwelle 30 und das Kopplungselement 8 das anliegende Drehmoment auf den Schließzylinder 4 übertragen wird. Als Tiefenanschlag für das Türbetätigungsteil 3 ist an dem Ende der Rasterwelle 30 des Verbindungselements 6 ein umlaufender Kragen 21 ausgebildet.

Um zu gewährleisten, dass die Verbindungselemente 5 und 6 nach der Montage des Systems 1 nicht wieder aus den Ausnahmen 23 und 24 des Schließzylinders 4 herausgezogen werden können, sind an jeder Aufnahme 23 und 24 des Schließzylinders 4 Sicherungselemente 25 vorgesehen.

Die Sicherungselemente 25 sind unterhalb der Aufnahmen 23 und 24 in einer nicht dargestellten Bohrung im Schließzylinder 4 an einem den unteren Teil der Sicherungselemente 25 bildenden stiftartigen Abschnitt gehalten und werden in Schlitzen 33 im Schließzylinder 4 im Bereich der Aufnahmen 23 und 24 geführt. Auf die stiftartigen Abschnitte der Sicherungselemente 25 ist dabei vorzugsweise eine Druckfeder 26 aufgeschoben, so dass die Sicherungselemente 25 nach oben hin, d. h. in Richtung der Aufnahmen 23 und 24 federbelastet sind. Wäre die Rasterwelle des Verbindungselements 5 oder 6 entgegen der Darstellung in Aufnahmen der Türbetätigungsteile 2 und 3 aufnehmbar, wäre es denkbar, die Sicherungselemente 25 an den Türbetätigungsteilen 2 und 3 auszugestalten. Dabei könnten die Sicherungselemente 25 auch als Schrauben oder als einschiebbare Stifte ausgebildet sein. Vorliegend eignen sich jedoch vorzugsweise federbelastete Sicherungselemente 25, da der Schließzylinder 4 überlicherweise im Schloss einer Tür verbaut ist und eine manuelle Sicherung durch Sicherungselemente 25, die als Schraube oder als einschiebbarer Stift ausgebildet sind, bei der Montage nicht möglich ist.

Der obere Teil der Sicherungselemente 25 wird durch einen sichelförmigen Abschnitt gebildet. Der sichelförmige Abschnitt ist dabei an die Größe der Rasterwelle 30 des Verbindungselements 5 und 6, insbesondere an deren Wellentäler, welche als außenliegende Ringnut 31 ausgestaltet sind, angepasst. Beim Einschieben der Rasterwelle 30 des Verbindungselements 5 oder 6 greift somit das Sicherungselement 25 mit seinem sichelförmigen Abschnitt aufgrund der Federbelastung, die von der Druckfeder 26 über den unteren stiftartigen Teil des Sicherungselements 25 auf den sichelförmigen Abschnitt des Sicherungselements 25 übertragen wird, automatisch in eine Ringnut 31 der Rasterwelle 30 des Verbindungselements 5 oder 6 und gleitet beim weiteren Vorschieben der Rasterwelle 30 des Verbindungselements 5 oder 6 zur Schließnocke 11 hin wieder aus der Ringnut 31 und rutscht über den der Ringnut 31 folgenden Ring 32 der Rasterwelle 30 des Verbindungselements 5 oder 6. Danach greift das Sicherungselement 25 dem Vorschub der Rasterwelle 30 des Verbindungselements 5 oder 6 entsprechend in die folgende Ringnut 31 ein. Um dabei den Anforderungen der Variabilität des erfindungsgemäßen Systems bei der Montage gerecht zu werden, ist es daher von Vorteil, die Rasterwelle 30 des Verbindungselements 5 oder 6 mit entsprechend vielen Ringen 32 und Ringnuten 31 in dichter Aufeinanderfolge, d. h. mit gerigem Abstand zueinander auszugestalten, um so einen variablen Abstand zwischen den Türbetätigungsteilen 2 und 3 und dem Schließzylinder 4 einstellen zu können. Sollte die Aufeinanderfolge der Ringnuten 31 und der Ringe 32, d. h. die Ausgestaltung der Rasterwelle 30 des Verbindungselements 5 oder 6 dazu führen, dass das Sicherungselement 25 gerade nicht in eine Ringnut 31 greift, sondern an einem Ring 32 anliegt, bietet es sich vorteilhafter Weise an Distanzscheiben in dem erfindungsgemäßen System zu verbauen, so dass das Sicherungselement 25 von dem Ring 32 der Rasterwelle 30 des Verbindungselements 5 oder 6 in eine dem Ring 32 vorhergehende Ringnut 31 greift.

Zur Sicherung der Druckfeder 26 und des Sicherungselements 25 in der Bohrung des Schließzylinders 4 ist im unteren Teil der Bohrung eine Gewindehülse 27 auf einen Gewindeabschnitt aufschraubbar, wobei der Gewindeabschnitt entweder am unteren Teil des Sicherungselements 25 o- der in der Wandung der Bohrung ausgestaltet sein kann. Aufgrund der Vorspannung der Druckfeder 26, welche über die Gewindehülse 27 einstellbar ist, drückt das Sicherungselement 25 mit seinem oberen Teil, der vorliegend als sichelförmiger Abschnitt ausgestaltet ist, gegen die Rasterwelle 30 des Verbindungselements 5 oder 6, wodurch das Sicherungselement 25 mit seinem oberen Teil in eine Ringnut der Rasterwelle des Verbindungselements 5 oder 6 selbsttätig eingreift.

Um ein mehrteiliges Sicherungselement 25, welches in der hier vorgesehenen Funktionsweise eine Druckfeder 26 und eine Gewindehülse 27 umfasst, könnte auch ein Sicherungselement 25 mit angeprägter Blattfeder zur Sicherung der Rasterwelle 30 in der Aufnahme 23 und/oder 24 in einer nicht dargestellten Bohrung im Schließzylinder 4 gehalten und in Schlitzen 33 im Schließzylinder 4 im Bereich der Aufnahmen 23 und 24 geführt werden.

Anstelle der in der Figur dargestellten Türbetätigungsteile 2 und 3, die als Drehknäufe ausgestaltet sind, wobei das Türbetätigungsteil 2 ein spezieller elektro(mecha)nischer Drehknauf ist, können im Sinne der Erfindung die Türbetätigungsteile 2 und 3 auch beidseitig beispielsweise als einfache Drehknäufe oder Türgriffe ausgestaltet sein. Natürlich sind auch Kombinationen von Türgriffen mit Drehknäufen oder mit elektro(mecha)nischen Drehknäufen denkbar. Auch einseitig feststehende Türknäufe sind im Sinne der Erfindung mit Drehknäufen, elektro(mecha)nischen Drehknäufen und Türgriffen kombinierbar. Auch ist es denkbar, dass erfindungsgemäße System in einem Knaufzylinder zu verbauen, der auf einer Seite mit einem Schlüssel und auf der anderen Seite mit einem fest montierten drehbaren Knauf betätigt wird. Insgesamt lässt sich das erfindungsgemäße System für verschiedene Bauformen, wie beispielsweise Profilzylinder, Rundzylinder, Ovalzylinder, die als Halb- und oder Doppelzylinder ausgestaltet sind, verwenden.

Zudem soll das System nicht nur für die Montage in Türen verstanden werden. Vielmehr ist es auch denkbar, das System zur Montage von Fensterbetätigungsteilen zu verwenden.

Die Erfindung beschränkt sich in ihrer Ausführung nicht auf das vorhergehend bevorzugte Ausführungsbeispiel bzw. auf das vorhergehend angegebene Verfahren.

### Bezugszeichenliste

- 1: System
- 2: Türbetätigungsteil
- 3: Türbetätigungsteil
- 4: Schließzylinder
- 5: Verbindungselement
- 6: Verbindungselement
- 7: Kopplungselement
- 8: Kopplungselement
- 9: Sechskantmutter

- 10: Sechskantmutter
- 11: Schließnocke
- 12: Ende zu 7
- 13: Ende zu 8
- 14: Bohrung in 8
- 15: Bohrung in 30 zu 6
- 16: Spannbolzen
- 17: Ende zu 7
- 18: Ende zu 8
- 19: Kupplungsscheibe

- 20: Zapfen zu 19
- 21: Kragen
- 22: Bohrung in 11
- 23: Aufnahme in 4
- 24: Aufnahme in 4
- 25: Sicherungselement
- 26: Druckfeder
- 27: Gewindehülse

- 30: Rasterwelle
- 31: Ring zu 30
- 32: Ringnut zu 30
- 33: Lagerfläche zu 30
- 34: Lagerfläche zu 30

## Patentansprüche

1. System (1), umfassend zumindest ein Türbetätigungsteil (2, 3), einen Schließzylinder (4) und ein das Türbetätigungsteil (2, 3) und den Schließzylinder (4) verbindendes Verbindungselement (5, 6), welches das Türbetätigungsteil (2, 3) und den Schließzylinder (4) über einen variablen Abstand miteinander verbindet, wobei der Abstand zwischen dem Türbetätigungsteil (2, 3) und dem Schließzylinder (4) über das Verbindungselement (5, 6) einstellbar ist, **dadurch gekennzeichnet,**
**dass** das Verbindungselement (5, 6) mehrteilig ausgestaltet ist und eine Rasterwelle (30) und wenigstens ein ein- oder mehrteilig ausgestaltetes Kopplungselement (7, 8), das das Drehmoment von dem Türbetätigungsteil (2, 3) auf den Schließzylinder (4) überträgt, umfasst.

2. System (1) nach Anspruch 1,
**dadurch gekennzeichnet,**
**dass** das Verbindungselement (5, 6) das Türbetätigungsteil (2, 3) und den Schließzylinder (4) kraft- und/oder formschlüssig miteinander verbindet.

3. System (1) nach Anspruch 1 oder 2,
**dadurch gekennzeichnet,**
**dass** das Verbindungselement (5, 6) ein Drehmoment von dem Türbetätigungsteil (2, 3) auf den Schließzylinder (4) überträgt.

4. System (1) nach einem der vorhergehenden Ansprüche,
**dadurch gekennzeichnet,**
**dass** das Verbindungselement (5, 6) eine Ausrichtung des Schließzylinders (4) in einem Schloss zwischen dem Schließzylinder (4) und dem Türbetätigungsteil (2, 3) anpasst.

5. System (1) nach einem der vorhergehenden Ansprüche,
**dadurch gekennzeichnet,**
**dass** ein Lösen der Verbindung zwischen dem Türbetätigungsteil (2, 3) und dem Schließzylinder (4) durch das Verbindungselement (5, 6) bis zu einem bestimmten Maß gehindert ist.

6. System (1) nach einem der vorhergehenden Ansprüche,
**dadurch gekennzeichnet,**
**dass** das Türbetätigungsteil (2, 3) und/oder der Schließzylinder (4) wenigstens eine Aufnahme (23, 24) zur Aufnahme des Verbindungselements (5, 6) aufweist.

7. System (1) nach einem der vorhergehenden Ansprüche,
**dadurch gekennzeichnet,**
**dass** durch Verrasten des Verbindungselements (5, 6) an oder in dem Türbetätigungsteil (2, 3) und/oder an oder in dem Schließzylinder (4) das Türbetätigungsteil (2, 3) und der Schließzylinder (4) miteinander kraft- und/oder formschlüssig verbunden sind.

8. System (1) nach einem der vorhergehenden Ansprüche,
**dadurch gekennzeichnet,**
**dass** das Verbindungselement (5, 6) an oder in dem Türbetätigungsteil (2, 3) und/oder an oder in dem Schließzylinder (4) durch wenigstens ein Sicherungselement (25) sicherbar ist.

9. System (1) nach dem Anspruch 8,
**dadurch gekennzeichnet,**
**dass** das Sicherungselement (25) eine Wellensicherung ist, die die Verbindung der Rasterwelle (30) an oder in dem Türbetätigungsteil (2, 3) und/oder an oder in dem Schließzylinder (4) sichert.

10. System (1) nach einem der Ansprüche 8 oder 9,
**dadurch gekennzeichnet,**
**dass** das Sicherungselement (25) federbelastet ist.

11. System (1) nach einem der vorhergehenden Ansprüche,
**dadurch gekennzeichnet,**
**dass** zwischen dem Verbindungselement (5, 6) und dem Türbetätigungsteil (2, 3) wenigstens ein Ausgleichselement anordenbar ist, über den ein Fluchtungsfehler des Systems (1) ausgleichbar ist.

12. Verfahren zur Verbindung eines Türbetätigungsteils (2, 3) mit einem Schließzylinder (4) unter Verwendung eines Systems (1) nach einem der vorhergehenden Ansprüche,
**dadurch gekennzeichnet,**
**dass** der Schließzylinder (4) und das Türbetätigungsteil (2, 3) über ein Verbindungselement (5, 6) kraft- und/oder formschlüssig miteinander in Eingriff gebracht werden.

13. Verfahren nach Anspruch 12,
**dadurch gekennzeichnet,**
**dass** das Türbetätigungsteil (2, 3) und der Schließzylinder (4) derart über das Verbindungselement (5, 6) miteinander verbunden werden, dass ein Drehmoment von dem Türbetätigungsteil (2, 3) auf den Schließzylinder (4) übertragen wird.

14. Verfahren nach Anspruch 12 oder 13,
**dadurch gekennzeichnet,**
**dass** das Verbindungselement (5, 6) zum kraft- und/oder formschlüssigen Ineingriffbringen des Schließzylinders (4) mit dem Türbetätigungselement in das Türblatt und/oder das Schloss zum Schließzylinder (4) hin eingeschoben wird, um das Verbindungselement (5, 6) mit dem Schließzylinder (4) zu verbinden, insbesondere in einer Aufnahme des Schließzylinder (4) zu verrasten.

15. Verfahren nach einem der Ansprüche 12 bis 14, **dadurch gekennzeichnet,**
**dass** das Verbindungselement (5, 6) nach Verrasten mit dem Schließzylinder (4) und/oder dem Türbetätigungsteil (2, 3), insbesondere nach Verrasten in der Aufnahme des Schließzylinders (4), mittels eines Sicherungselements (25) gesichert wird.

## Claims

1. A system (1), comprising at least one door actuating member (2, 3), a locking cylinder (4) and a connecting element (5, 6) connecting the door actuating member (2, 3) and the locking cylinder (4), which element connects the door actuating member (2, 3) and the locking cylinder (4) via a variable distance to each other, wherein the distance between the door actuating member (2, 3) and the locking cylinder (4) is adjustable via the connecting element (5, 6),
**characterized in**
**that** the connecting element (5, 6) is configured in several parts and comprises a raster shaft (30) and at least one coupling element (7, 8) configured in one piece or several pieces, which transfers the torque from the door actuating member (2, 3) onto the locking cylinder (4).

2. The system (1) according to claim 1,
**characterized in**
**that** the connecting element (5, 6) connects the door actuating member (2, 3) and the locking cylinder (4) non-positively and/or positively to each other.

3. The system (1) according to claim 1 or 2,
**characterized in**
**that** the connecting element (5, 6) transfers a torque from the door actuating member (2, 3) onto the locking cylinder (4).

4. The system (1) according to any of the preceding claims,
**characterized in**
**that** the connecting element (5, 6) adapts an orientation of the locking cylinder (4) within a lock between the locking cylinder (4) and the door actuating member (2, 3).

5. The system (1) according to any of the preceding claims,
**characterized in**
**that** a release of the connection between the door actuating member (2, 3) and the locking cylinder (4) is prevented by the connecting element (5, 6) up to a certain dimension.

6. The system (1) according to any of the preceding claims,
**characterized in**
**that** the door actuating member (2, 3) and/or the locking cylinder (4) includes at least one reception (23, 24) for the reception of the connecting element (5, 6).

7. The system (1) according to any of the preceding claims,
**characterized in**
**that**, by latching the connecting element (5, 6) at or in the door actuating member (2, 3) and/or at or in the locking cylinder (4), the door actuating member (2, 3) and the locking cylinder (4) are non-positively and/or positively connected to each other.

8. The system (1) according to any of the preceding claims,
**characterized in**
**that** the connecting element (5, 6) may be secured at or in the door actuating member (2, 3) and/or at or in the locking cylinder (4) by means of at least one securing element (25).

9. The system (1) according to claim 8,
**characterized in**
**that** the securing element (25) is a shaft securing, which secures the connection of the raster shaft (30) at or in the door actuating member (2, 3) and/or at or in the locking cylinder (4).

10. The system (1) according to claim 8 or 9,
**characterized in**
**that** the securing element (25) is spring-loaded.

11. The system (1) according to any of the preceding claims,
**characterized in**
**that** at least one compensating element may be disposed between the connecting element (5, 6) and the door actuating member (2, 3), via which an alignment fault of the system (1) may be compensated for.

12. A method for connecting a door actuating member (2, 3) to a locking cylinder (4) while using a system according to any of the preceding claims,
**characterized in**
**that** the locking cylinder (4) and the door actuating member (2, 3) are brought into non-positive and/or positive engagement with each other via a connecting element (5, 6).

13. The method according to claim 12,
**characterized in**
**that** the door actuating member (2, 3) and the locking cylinder (4) are connected to each other in such a manner via the connecting element (5, 6), that a torque from the door actuating member (2, 3) is transferred onto the locking cylinder (4).

14. The method according to claim 12 or 13,
**characterized in**
**that** the connecting element (5, 6), for non-positive and/or positive engagement of the locking cylinder (4) with the door actuating member (2, 3), is inserted into the door leaf and/or the connect towards the locking cylinder (4), in order to latch the connecting element (5, 6) with the locking cylinder (4), in particular for latching in a reception of locking cylinder (4).

15. The method according to any of the claims 12 to 14,
**characterized in**
**that** the connecting element (5, 6) after latching with the locking cylinder (4) and/or the door actuating member (2, 3), in particular after latching in the reception of the locking cylinder (4), is secured by means of a securing element (25).

## Revendications

1. Système (1) comportant au moins un membre d'actionnement de porte (2, 3), un cylindre de verrouillage (4) et un élément de connexion (5, 6) reliant le membre d'actionnement de porte (2, 3) et le cylindre de verrouillage (4), lequel élément relie le membre d'actionnement de porte (2, 3) et le cylindre de verrouillage (4) l'un à l'autre par l'intermédiaire de d'une distance variable, la distance variable entre le membre d'actionnement de porte (2, 3) et le cylindre de verrouillage (4) pouvant être réglée par l'intermédiaire de l'élément de connexion (5, 6),
**caractérisé en ce**
**que** l'élément de connexion (5, 6) est aménagé en plusieurs parts et comporte un arbre à crans (30) et au moins un élément d'accouplement (7, 8) aménagé en une ou en plusieurs parts, lequel transmet le couple de rotation depuis membre d'actionnement de porte (2, 3) vers le cylindre de verrouillage (4).

2. Système (1) selon la revendication 1,
**caractérisé en ce**
**que** l'élément de connexion (5, 6) relie le membre d'actionnement de porte (2, 3) et le cylindre de verrouillage (4) l'un à l'autre par la force et/ou par la forme.

3. Système (1) selon la revendication 1 ou 2,
**caractérisé en ce**
**que** l'élément de connexion (5, 6) transmet un couple de rotation depuis le membre d'actionnement de porte (2, 3) vers le cylindre de verrouillage (4).

4. Système (1) selon l'une des revendications précédentes,
**caractérisé en ce**
**que** l'élément de connexion (5, 6) adapte une orientation du cylindre de verrouillage (4) dans une serrure entre le cylindre de verrouillage (4) et le membre d'actionnement de porte (2, 3).

5. Système (1) selon l'une des revendications précédentes,
**caractérisé en ce**
**qu'**un enlèvement de la connexion entre le membre d'actionnement de porte (2, 3) et le cylindre de verrouillage (4) par l'élément de connexion (5, 6) est empêché jusqu'à une dimension déterminée.

6. Système (1) selon l'une des revendications précédentes,
**caractérisé en ce**
**que** le membre d'actionnement de porte (2, 3) et/ou le cylindre de verrouillage (4) présente au moins une réception (23, 24) pour la réception de l'élément de connexion (5, 6).

7. Système (1) selon l'une des revendications précédentes,
**caractérisé en ce**
**que**, par l'encastrement de l'élément de connexion (5, 6) sur ou dans le membre d'actionnement de porte (2, 3) et/ou sur ou dans le cylindre de verrouillage (4), le membre d'actionnement de porte (2, 3) et le cylindre de verrouillage (4) sont reliés l'un à l'autre par la force et/ou par la forme.

8. Système (1) selon l'une des revendications précédentes,
**caractérisé en ce**
**que** l'élément de connexion (5, 6) peut être sécurisé par au moins un élément de sécurisation (25) sur ou dans le membre d'actionnement de porte (2, 3) et/ou sur ou dans le cylindre de verrouillage (4).

9. Système (1) selon la revendication 8,
**caractérisé en ce**
**que** l'élément de sécurisation (25) consiste en une sécurisation de l'arbre, laquelle sécurise la connexion de l'arbre à crans (30) sur ou dans le membre d'actionnement de porte (2, 3) et/ou sur ou dans le cylindre de verrouillage (4).

10. Système (1) selon l'une des revendications 8 ou 9,
**caractérisé en ce**
**que** l'élément de sécurisation (25) est chargé par ressort.

11. Système (1) selon l'une des revendications précédentes,
**caractérisé en ce**
**que**, entre l'élément de connexion (5, 6) et le membre d'actionnement de porte (2, 3), au moins un élément de compensation peut être agencé, par l'intermédiaire duquel un défaut d'alignement du système (1) peut être compensé.

12. Procédé pour la connexion d'un membre d'actionnement de porte (2, 3) à un cylindre de verrouillage (4) en utilisant un système (1) selon l'une des revendications précédentes,
**caractérisé en ce**
**que** le cylindre de verrouillage (4) et le membre d'actionnement de porte (2, 3) sont mis en engrènement l'un à l'autre par la force et/ou par la forme par l'intermédiaire d'un l'élément de connexion (5, 6).

13. Procédé selon la revendication 12,
**caractérisé en ce**
**que** le membre d'actionnement de porte (2, 3) et le cylindre de verrouillage (4) sont reliés l'un à l'autre de telle façon par l'intermédiaire de l'élément de connexion (5, 6) qu'un couple de rotation est transmis depuis le membre d'actionnement de porte (2, 3) sur le cylindre de verrouillage (4).

14. Procédé selon la revendication 12 ou 13,
**caractérisé en ce**
**que** l'élément de connexion (5, 6) est inséré dans le vantail de port et/ou la serrure vers le cylindre de verrouillage (4) pour mettre en engrènement par la force et/ou par la forme le cylindre de verrouillage (4) avec le membre d'actionnement de porte (2, 3), pour relier l'élément de connexion (5, 6) au cylindre de verrouillage (4), tout particulièrement pour le faire encastrer dans une réception du cylindre de verrouillage (4).

15. Procédé selon l'une des revendications 12 à 14,
**caractérisé en ce**
**que**, après l'encastrement avec le cylindre de verrouillage (4) et/ou le membre d'actionnement de porte (2, 3), tout particulièrement après l'encastrement dans la réception du cylindre de verrouillage (4), l'élément de connexion (5, 6) est sécurisé au moyen d'un élément de sécurisation (25).
